(19) Europäisches Patentamt
European Patent Office
Office européen des brevets

(11) EP 2 814 789 B1

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(21) Anmeldenummer: **13704745.2**

(22) Anmeldetag: **06.02.2013**

(51) Int Cl.:
***C04B 41/49*** (2006.01)
***C08L 83/08*** (2006.01)
***C08G 77/26*** (2006.01)
***C08G 77/00*** (2006.01)

(86) Internationale Anmeldenummer:
**PCT/EP2013/052255**

(87) Internationale Veröffentlichungsnummer:
**WO 2013/120737 (22.08.2013 Gazette 2013/34)**

(54) **HYDROPHOBIERMITTEL FÜR BESCHICHTUNGEN**

HYDROPHOBING AGENT FOR COATINGS

AGENT HYDROFUGE POUR REVÊTEMENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.02.2012 DE 102012202389**

(43) Veröffentlichungstag der Anmeldung:
**24.12.2014 Patentblatt 2014/52**

(73) Patentinhaber: **Wacker Chemie AG**
**81737 München (DE)**

(72) Erfinder:
- **STEPP, Michael**
**A-5122 Überackern (AT)**
- **HAUSBERGER, Albert**
**83361 Kienberg (DE)**
- **SEBALD, Martin**
**84533 Haiming (DE)**

(74) Vertreter: **Fritz, Helmut et al**
**Wacker Chemie AG**
**Intellectual Property**
**Hanns-Seidel-Platz 4**
**81737 München (DE)**

(56) Entgegenhaltungen:
**EP-A1- 2 035 489**
**WO-A1-2011/084556**
**US-A1- 2005 148 752**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 814 789 B1

## Beschreibung

Die Erfindung betrifft Mischungen Epoxyfunktionen enthaltenender Verbindungen und Aminofunktionen enthaltender Organosiloxane, deren Verwendung in witterungsbeständigen Anstrichen und Beschichtungen und witterungsbeständige Anstriche und Beschichtungen enthaltend diese Mischungen.

Der Schutz von industriellen Baukonstruktionen insbesondere aber Gebäudefassaden aus saugenden mineralischen Baustoffen wie Beton und Mauerwerk aus Ziegeln oder Kalksandstein vor Feuchtigkeit und Wasser ist eine der Hauptaufgaben im Bautenschutz.

Eindringendes Wasser hat mannigfaltige nachteilige Effekte: Es durchfeuchtet die Bausubstanz, löst anorganische Salze sowie in den Anstrichen mitverwendete Hilfs- und Zusatzstoffe und transportiert diese beim Verdunsten an die Oberflache, wodurch es dort zu Ausblühungen und Salzabsprengungen, zur Fleckenbildung durch die genannten Farbenbestandteile und den Befall von Mikroorganismen wie Pilze, Algen, Moose kommen kann. Zusätzlich muss aufgrund der verminderten Wärmedämmung mit einer Beeinträchtigung des Wohnklimas sowie einem erhöhten Energieverbrauch gerechnet werden.

In den letzten Jahren wurden wirkungsvolle Bautenfarben entwickelt, die sowohl hydrophob als auch atmungsaktiv sind, d.h. äußeres Regenwasser perlt ab, aber unter der Farbe im Baustoff befindliche Feuchtigkeit kann als Wasserdampf den Anstrich passieren. Diese Farben basieren im Allgemeinen auf einer wässrigen Polymerdispersion, welche als Bindemittel beliebige organische Harze sowohl vom vernetzbaren als auch nicht vernetzbaren Typ enthalten kann, vor allem aber Vinylacetat- und Styrolacrylat-Copolymere und auch reine Polyacrylate und als der Farbe ihre wesentlichen Merkmale verleihenden Bestandteil, wässrige Emulsionen wasserabweisender Organosiloxanadditive enthalten.

Als Kriterium für die wasserabweisende Wirkung einer Beschichtung oder Imprägnierung dient die Wasserdurchlässigkeitsrate gemäß EN1062-3.

In DE 10328636 wird ausführlich dargelegt, dass in der Praxis der Feuchtigkeitsschutz herkömmlicher Farbsysteme erst nach längerer Zeit erreicht wird. Zur Überwindung dieses Nachteils wird der Zusatz von 0,01-10 Gew.-% mit Oxyalkylenethergruppen modifizierten Epoxypolysiloxanen zur Gesamtformulierung vorgeschlagen. Die Nützlichkeit von epoxyfunktionellen Polysiloxanen als Hydrophobieradditiv in Beschichtungszusammensetzungen (Polymerdispersionen) wurde früher bereits in DE 69922682 beschrieben: es kommen dabei Emulsionen von Polysiloxanen zum Einsatz, die ausschließlich Epoxyfunktionen tragen. Die Verwendung der gleichen Produkte zur wasserabweisenden Imprägnierung von porösen und nichtporösen Baumaterialien beansprucht DE 60108984. Die hohe Reaktivität der Epoxyfunktionen mit den basischen Substraten wird dabei für die besondere Wirkung verantwortlich gemacht.

In beiden Fällen sind die epoxyfunktionellen Polysiloxane jedoch nur über Hydrosilylierungsreaktionen zugänglich, die aufgrund des Einsatzes von nicht rückgewinnbarem Platinkatalysator teuer sind und zudem z.T. hochtoxische ungesättigte Epoxide als Rohstoffe erfordern, deren Umgang nicht nur bei der großtechnischen Herstellung im Betrieb einen hohen Sicherheitsaufwand nach sich zieht. Um die Verschleppung von nicht umgesetzten giftigen Ausgangsmaterialien in das Endprodukt und damit in die Umwelt zu vermeiden, ist eine entsprechend aufwendige Aufarbeitung notwendig.

In DE 3713126 werden Kombinationen von aminofunktionellen Polydiorganosiloxanen mit Siliconharzen zur Hydrophobierung von wässrigen Dispersionsfarben beansprucht, wobei allerdings nicht ersichtlich ist, ob der positive Effekt auf dem hohen Anteil an teurem Siliconharz oder auf dem aminofunktionellen Polysiloxan oder der Kombination beider Additive beruht.

WO 2011084556 beschreibt eine Epoxysilicon Beschichtungszusammensetzung, die nach Vernetzung eine besonders witterungsbeständige Beschichtung ergibt, wenn der Gehalt an Alkoxygruppen im Siliconharz (B) mindestens 26 mol-% pro mol Silicium aufweist.

US 2005148752 beschreibt eine vernetzende Epoxysilicon Beschichtungszusammensetzung aus einer Kombination eines Epoxyharzes mit einem Aminopolysiloxan-Härter. Die Herstellung des Aminopolysiloxan-Härters erfolgt aus einem Aminoalkohol mit einem Alkoxysilan.

EP 2035489 A beschreibt eine Emulsion enthaltend ein Epoxysilicon und Aminopolyorganosiloxan.

Gegenstand der Erfindung sind Mischungen aus Organosiloxanen der allgemeinen Formel (I)

$$\mathbf{M_m D_n T_o Q_p} \qquad \textbf{(I),}$$

bei der

**M** eine terminale Gruppe der allgemeinen Formel (Ia)

$$R^1R^2R^3SiO_{1/2} \qquad (Ia),$$

**D** eine difunktionelle Gruppe der allgemeinen Formel (Ib)

$$R^4R^5SiO_{2/2} \qquad (Ib),$$

**T** eine trifunktionelle Gruppe der allgemeinen Formel (Ic)

$$R^6SiO_{3/2} \qquad (Ic),$$

**Q** eine Einheit der allgemeinen Formel $SiO_{4/2}$ bedeuten,
wobei $\mathbf{R^1}$, $\mathbf{R^2}$, $\mathbf{R^3}$, $\mathbf{R^4}$, $\mathbf{R^5}$ und $\mathbf{R^6}$ unabhängig voneinander für einen Kohlenwasserstoffrest mit 1 bis 20 C-Atomen, der Heteroatome enthalten kann, den Hydroxyrest oder Alkoxyreste mit 1 bis 10 C-Atomen stehen, wobei mindestens ein Kohlenwasserstoffrest $\mathbf{R^6}$ mindestens eine Aminfunktion enthält, und höchstens 25% aller Reste Hydroxy- oder Alkoxyreste sind,
**m** eine ganze Zahl von 0-20,
**n** eine ganze Zahl von 0-1000,
**o** eine ganze Zahl von 1-30,
**p** eine ganze Zahl von 0-20 und
**m + n + o + p** eine ganze Zahl von mindestens 2 bedeutet,
mit Epoxiden der allgemeinen Formel (II)

$$\mathbf{(A\text{-}B)_qC} \qquad \mathbf{(II)}$$

bei der

- **A** unabhängig voneinander für einen einwertigen linearen oder verzweigten Kohlenwasserstoffrest mit 1 bis 30 C-Atomen steht, der durch Heteroatome substituiert sein kann, der von Heteroatomen unterbrochen sein kann und der eine oder mehrere Epoxyfunktionen enthalten kann,
- **B** unabhängig voneinander für eine zweiwertige Ether-, Carbonat- oder Harnstofffunktion oder eine Säure-, Ester-, Urethan-, Säureanhydrid- oder Amidfunktion einer Carbonsäure, Thiocarbonsäure, Sulfonsäure, Phosphonsäure oder Phosphorsäure steht,
- **q** eine Zahl von 1 bis 8 bedeutet,
- **C** einen **q**-wertigen linearen oder verzweigten

Kohlenwasserstoffrest mit einem bis 30 C-Atomen, der Heteroatome enthalten kann, der eine oder mehrere Epoxyfunktionen enthalten kann, bedeutet, mit der Maßgabe, dass die Verbindung der allgemeinen Formel (II) mindestens eine Epoxyfunktion enthält.

Ebenfalls Gegenstand der Erfindung ist die Verwendung der Mischungen aus Organosiloxanen der allgemeinen Formel (I) mit Epoxiden der allgemeinen Formel (II) als hydrophobierendes Additiv für witterungsbeständige Anstriche und Beschichtungen.

Ebenfalls Gegenstand der Erfindung sind witterungsbeständige Anstriche und Beschichtungen, enthaltend die Mischungen aus Organosiloxanen der allgemeinen Formel (I) mit Epoxiden der allgemeinen Formel (II).

Überraschend wurde gefunden, dass einfache Mischungen aus kommerziell erhältlichen, Epoxygruppen tragenden Fettsäureestern der allgemeinen Formel (II) und aminofunktionellen Organosiloxanen der allgemeinen Formel (I) gängigen witterungsbeständigen Anstrichen und Beschichtungen, insbesondere Dispersionsfarben einen starken wasserabweisenden Effekt verleihen. Bei der Anwendung werden keine unerwünschten oder schädlichen Spaltprodukte oder Emissionen wie z.B. Lösungsmitteldämpfe freigesetzt. Auch treten an den ausgehärteten Farbfilmen keine farbverändernden Effekte wie Vergilbung auf. Ein weiterer Vorteil dieser Mischungen besteht darin, dass beide Komponenten gängige, kommerziell erhältliche und kostengünstige Produktklassen sind. Außerdem handelt es sich bei den Epoxyfettsäureestern der allgemeinen Formel (II) um Produkte, die aus nachwachsenden Rohstoffen wie z.B. Pflanzenölen umweltschonend hergestellt werden können und die keine toxischen oder umweltschädigenden Eigenschaften aufweisen.

Die Dispersionsfarben basieren im Allgemeinen auf einer wässrigen Polymerdispersion, welche als Bindemittel beliebige organische Harze sowohl vom vernetzbaren als auch vom nicht vernetzbaren Typ enthalten kann. Bei den dabei verwendeten Polymeren handelt es sich vorzugsweise um Polymere oder Copolymere deren Monomere ausgewählt sind aus Vinylestern wie z.B. Vinylacetat, Vinyllaurat, Vinylversatat, Acrylsäureestern wie z.B. n-Butylacrylat, Methacrylsäureestern wie z.B. Methylmethacrylat, Styrol, Isobuten, 1-Buten, 1,3-Butadien, Ethylen, 1-Hexen, Vinylchlorid, Tetrafluorethylen u.a., vor allem aber Vinylacetat-Copolymere mit Ethylen und/oder Vinylchlorid, Styrolacrylat-Copolymere und auch reine Polyacrylate. Weiterhin enthalten sind typischerweise Pigmente, insbesondere Titandioxid

vom Rutil-Typ, Füllstoffe wie natürlich Calcite, gefällte Calciumcarbonate, Aluminiumsilikate und Glimmer sowie Quarz. Des Weiteren werden übliche Hilfs- und Zusatzstoffe mitverwendet wie Cellulose-Derivate, Bentonite, PUR-Verdicker und/oder Assoziativ-Verdicker zur Einstellung des rheologischen Verhaltens, Neutralisationsmittel, Netz- und Dispergieradditive wie insbesondere Polycarbonsäuren, Konservierungsmittel, Entschäumer auf Basis von Mineralöl, Siliconöl oder Polyethersiloxanen. Zusätzlich können Silikate wie Natriumwasserglas und/oder Siliconharze und/oder Fluoralkylpolymerdispersionen enthalten sein.

Bei den Organosiloxanen der allgemeinen Formel (I) handelt es sich vorzugsweise um kommerziell erhältliche Amino(poly)siloxane. Die Aminfunktionen befinden sich dabei in den Resten $R^6$ gebunden an eine tertiäre Si-Einheit der allgemeinen Formel (Ic). Die Verbindungen der allgemeinen Formel (I) sind z.B. durch Umsetzung von OH-terminierten Polydiorganosiloxanen mit aminofunktionellen Trialkoxysilanen unter Abspaltung von Alkohol oder durch basisch katalysierte Äquilibrierung von aminofunktionellen (Poly)siloxanen mit anderen (Poly)Siloxanen zugänglich. **$R^1$, $R^2$, $R^3$, $R^4$, $R^5$** und **$R^6$** stehen vorzugsweise für einwertige lineare, verzweigte, cyclische, aromatische, gesättigte oder ungesättigte Kohlenwasserstoffreste sowie den hydroxyrest oder Alkoxyreste mit 1 bis 10 C-Atomen, die linear, verzweigt oder cyclisch sein können, wobei höchstens 25% insbesondere höchstens 3% aller Reste Hydroxy- oder Alkoxyreste sind.

Vorzugsweise steht **$R^1$, $R^2$, $R^3$, $R^4$** und **$R^5$** in der allgemeinen Formel (I) für einen einwertigen unsubstituierten oder durch Halogenatome, Alkoxy-, Ammonium- oder Silylgruppen substituierten Kohlenwasserstoffrest mit 1 bis 20 Kohlenstoffatomen, den Hydroxyrest sowie Alkoxyreste mit 1 bis 10 C-Atomen. Besonders bevorzugt sind unsubstituierte Alkylreste, Cycloalkylreste, Alkylarylreste, Arylalkylreste und Phenylreste. Vorzugsweise weisen die Kohlenwasserstoffreste **$R^1$**, **$R^2$**, **$R^3$**, **$R^4$** und **$R^5$** 1 bis 8 Kohlenstoffatome auf. Besonders bevorzugt sind der Methyl-, Ethyl-, n-Propyl-, 2-Propyl-(=Isopropyl-), 3,3,3-Trifluorpropyl-, Vinyl-, 1-n-Butyl-, 2-Methylpropyl- (= Isobutyl-), 2-Butyl-, t-Butyl-, n-Pentyl-, Cyclopentyl-, Cyclohexyl-, n-Nonyl-, n-Decyl-, n-Undecyl-, 10-Undecenyl-, n-Dodecyl-, Isotridecyl-, n-Tetradecyl-, n-Hexadecyl-, Allyl-, Phenyl-, Benzyl-, p-Chlorphenyl-, o-(Phenyl)phenyl-, m-(Phenyl)phenyl-, p-(Phenyl)phenyl-, 1-Naphthyl-, 2-Naphthyl-, 2-Phenylethyl-, 1-Phenylethyl-, 3-Phenylpropyl-, 1-n-Hexyl-, 1-n-Heptyl-, 1-n-Octyl-, 2,4,4-Trimethyl-1-pentyl-, 2-Ethyl-1-hexyl-, 2-Methyl-1-pentyl-, sowie die unter den Sammelbegriffen Isohexyl-, Isooctylsubsummierten Reste, ganz besonders der Methyl-, der Ethyl-, der Propyl-, der Isobutyl-, der 1-n-Hexyl,- der 1-n-Octyl, der Isohexyl-, der Isooctyl- und der Phenylrest.

Beispiele für substituierte Reste **$R^1$, $R^2$, $R^3$, $R^4$** und **$R^5$** sind: 3-Chlorpropyl-, Chlormethyl-, Methoxymethyl-, Ethoxymethyl-, 2-Trimethylsilylethyl-, 2-Trimethylsiloxyethyl-, 2-Trimethoxysilylethyl-, 2-Dimethylmethoxysilylethyl-, 2-Dimethoxymethylsilyl-, 3-Trimethylammonium-propyl-, 3-Dimethylbenzylammoniumpropylrest.

Weitere Beispiele für substituierte Reste **$R^1$, $R^2$, $R^3$, $R^4$** und **$R^5$** sind $C_1$-$C_{12}$-Kohlenwasserstoffreste substituiert durch Reste der allgemeinen Formel

$$-(CR^7R^8)_rO)_s-R^9 \qquad \text{(III)}$$

wobei r für Werte von 1 bis 6 steht, **s** Werte von 1 bis 100 annehmen kann und **$R^7$, $R^8$** und **$R^9$** die Bedeutungen von **$R^1$, $R^2$, $R^3$, $R^4$** und **$R^5$** mit Ausnahme des Hydroxylrests und der Alkoxyreste aufweisen oder für Wasserstoff stehen, wobei auch Reste mit unterschiedlichen Einheiten der allgemeinen Formel (III) vorzugsweise als Blöcke vorliegen können, beispielweise - $CH_2CH_2CH_2$-O-$(CH_2CH_2O)_6$-$CH_3$, -$CH_2CH_2CH_2$-O-$(CH_2CH(CH_3)O)_8$-H,-$CH_2CH_2CH_r$O-$(CH_2CH_2CH_2CH_2O)$ $_{10}$-$CH_2CH_2CH_2CH_3$, -$CH_2CH_2CH_2$-O- $(CH_2CH_2O)_{10}$-$(CH_2CH(CH_3)O)_8$-$CH_2CH_2CH_2CH_3$.

Insbesondere bei Anwesenheit von Ethylenoxy-Resten oder quaternären Ammoniumresten kann die Verbindung der allgemeinen Formel (I) und/oder die Mischung der beiden Verbindungen der allgemeinen Formel (I) und (II) selbstemulgierende Eigenschaften aufweisen, wobei vorzugsweise nicht mehr als 60%, besonders bevorzugt nicht mehr als 30% insbesondere nicht mehr als 10% der Reste in den Verbindungen der allgemeinen Formel (I) für einen Ethylenoxyrest und/oder quaternären Ammoniumrest stehen.

Besonders bevorzugt für **$R^1$, $R^2$, $R^3$, $R^4$** und **$R^5$** sind der Methyl-, Ethyl-, Propyl-, 3,3,3-Trifluorpropyl-, Vinyl- und der Phenylrest. Ganz besonders der Methylrest.

Wenn **$R^1$, $R^2$, $R^3$, $R^4$** und **$R^5$** die Bedeutung Alkoxyreste mit 1 bis 10 C-Atomen aufweisen, weisen die Kohlenwasserstoffreste der Alkoxyreste vorzugsweise 1 bis 4 Kohlenstoffatome auf. Besonders bevorzugt sind die Kohlenwasserstoffreste der Alkoxyreste der Methyl-, Ethyl-, n-Propyl-, 2-Propyl-(=Isopropyl-), Vinyl-, 1-n-Butyl-, 2-Methylpropyl- (= Isobutyl-), 2-Butyl- und t-Butylrest.

**$R^6$** besitzt die gleiche Bedeutung wie die Reste **$R^1$, $R^2$, $R^3$, $R^4$** und **$R^5$.** Darüber hinaus steht $R^6$ für einen $C_1$-$C_{20}$-Kohlenwasserstoffrest, vorzugsweise $C_1$-$C_{10}$-Kohlenwasserstoffrest, mit mindestens einer Aminfunktion, vorzugsweise **-$NR^{10}R^{11}$,** wobei **$R^{10}$** und **$R^{11}$** die Bedeutungen von **$R^1$, $R^2$, $R^3$, $R^4$** und **$R^5$** mit Ausnahme des Hydroxylrests und der Alkoxyreste aufweisen oder für Wasserstoff stehen. Beispiele für Reste **$R^6$** sind: Aminomethyl-, 2-Aminoethyl-, 3-Aminopropyl-, 4-Aminobutyl-, 3-(2-Aminoethyl)aminopropyl-, (2-Aminoethyl)aminomethyl-, N-Methylaminomethyl-, N-Ethylaminomethyl-, N,N-Diethylamino-methyl-, N,N-Dibutylamino-methyl-, N-Butylaminomethyl-, N-Pentylaminomethyl-, N-Cyclohexylaminomethyl-, N-Hexylaminomethyl-, N-Octylaminomethyl-, N-(2-Ethylhexyl)aminomethyl-, N-Dodecylaminomethyl-, N-Hexadecylaminomethyl-, 2-N-Methylaminoethyl-, 3-N-Methylaminopropyl-, 4-N-Methylaminobutyl-,

N-Phenylaminomethyl-, N-Phenyl-N-methylaminomethyl-, N-Phenylaminopropyl-, N-Morpholinomethyl-, N-Pyrrolidinomethyl-, 3-(N-Cyclohexyl)aminopropyl-, 1-N-Imidazolidinopropylrest.

Weitere Beispiele für $\mathbf{R^6}$ sind $C_1$-$C_{12}$-Kohlenwasserstoffreste substituiert durCh $-(CH_2CH_2NH)_tH$ wobei t Werte von 1 bis 10, insbesondere 1, 2, 3 bedeutet.

Die Aminkonzentration in den Verbindungen der allgemeinen Formel (I) liegt im Bereich von 0,01 bis 10 mol/kg, vorzugsweise bei maximal 5 mol/kg, besonders bevorzugt bei maximal 1 mol/kg, insbesondere bei maximal 0,5 mol/kg sowie vorzugsweise bei mindestens 0,02 mol/kg, besonders bevorzugt bei mindestens 0,05 mol/kg, insbesondere bei mindestens 0,1 mol/kg.

Bei den Epoxyverbindungen der allgemeinen Formel (II) handelt es sich bevorzugt um epoxidierte Ether, Säuren, Ester, Urethane, Säureanhydride oder Amide, die vorzugsweise kommerziell erhältlich oder durch einfache Umsetzungen zugänglich sind. Die Epoxyfunktionen befinden sich vorzugsweise in den Kohlenwasserstoffresten **A.**

Der einwertige Rest **A** enthält vorzugsweise mindestens ein C-Atom und vorzugsweise maximal 26 C-Atome, besonders bevorzugt maximal 12 C-Atome und ist linear oder verzweigt aufgebaut und gegebenenfalls durch Heteroatome oder funktionelle Gruppen substituiert. Er kann neben den bevorzugten aliphatischen auch aromatische Einheiten sowie verbrückende Heteroatome, vorzugsweise Sauerstoff, enthalten. Bei dem Epoxyfunktionen tragenden Rest handelt es sich besonders bevorzugt um einen linearen Kohlenwasserstoffrest, der mindestens eine Epoxyfunktion enthält. Insbesondere tragen die beiden Kohlenstoffatome der Epoxyfunktion vorzugsweise jeweils ein Wasserstoffatom. Vorzugsweise enthält Rest **A** 6 oder mehr und insbesondere 12 oder mehr Kohlenstoffatome. Vorzugsweise enthält Rest **A** 22 oder weniger Kohlenstoffatome und höchstens durchschnittlich 2 C=C-Doppelbindungen. Untergeordnet kann Rest **A** auch alkoholische OH-Gruppen beispielsweise als Produkte einer Hydrolyse der Epoxyfunktion(en) enthalten.

Bei der Einheit **B** handelt es sich vorzugsweise um eine Säure-, Ester-, Urethan-, Säureanhydrid- oder Amidfunktion einer Carbonsäure, besonders bevorzugt um eine Säure- oder Esterfunktion, insbesondere um eine Esterfunktion einer Carbonsäure.

**q** steht vorzugsweise für 1, 2 oder 3, besonders bevorzugt für 3. Sofern **q** > 1 können die Einheiten **A** und **B** jeweils unterschiedlich oder gleich sein.

**C** steht für einen gegebenenfalls substituierten und gegebenenfalls Heteroatome enthaltenden ein-, zwei, drei-, vier-, fünf-, sechs-, sieben oder achtwertigen linearen oder verzweigten Kohlenwasserstoffrest mit maximal 30 C-Atomen oder für ein Wasserstoffatom. C leitet sich vorzugsweise von funktionellen Verbindungen **F** ab, die formal in der Lage sind, mit Säuren, besonders bevorzugt Carbonsäuren, unter Bildung von Ester-, Amid-, Urethan- oder Säureanhydrid-Gruppen zu reagieren. Zu diesen funktionellen Verbindungen **F** zählen demnach Verbindungen mit mindestens einer Hydroxyfunktion oder mindestens einer primären oder sekundären Aminfunktion, beispielsweise Alkohole wie beispielsweise Methanol oder Ethanol, 2-Butoxyethanol, Diethylenglykolmonoethylether, Polyethylenglykol einseitig methyl-endgestoppert, Diole, wie z.B. 1,2-Ethandiol oder 1,2-Propandiol, Diethylenglykol, Triethylenglykol, Polyethylenglykol, Dipropylenglykol, Polypropylenglykol, Dibutylenglykol, Triole, wie Glycerin, Trimethylolethan oder Trimethylolpropan, Tetrole wie Pentaerythritol oder Di-Trimethylolpropan, Phenole wie Phenol, Carbonsäuren wie Ameisensäure, Benzoesäure, Essigsäure, Ölsäure, Stearinsäure, Palmitinsäure, Linolsäure, Laurinsäure, Dicarbonsäuren wie Oxalsäure, Adipinsäure, Tricarbonsäuren wie Citronensäure, Hydroxycarbonsäuren wie Milchsäure, Salicylsäure oder Weinsäure, Aminocarbonsäuren wie Glycin oder Alanin, sowie Amine wie n-Butylamin oder Diethylamin, und Diamine wie 1,2-Diaminoethan (=Ethylendiamin), 1,3-Diaminopropan, 1,4-Diaminobutan, 1,5-Diaminopentan, 1,6-Diaminohexan, Triamine wie Diethylentriamin, Melamin, und Saccharide, insbesondere Hexosen wie Glucose oder Disaccharide wie Sucrose. Je nachdem ob eine oder mehrere funktionelle Gruppen der funktionellen Verbindung **F** über die Einheiten **B** mit den Resten **A** verknüpft sind, handelt es sich bei den Resten **C** um einwertige oder mehrwertige Reste. Die Reste **C** unterscheiden sich folglich dadurch von der Struktur der funktionellen Verbindung **F,** dass die mit den Einheiten **B** verknüpften Funktionen durch Bindungen ersetzt sind. Bei den einwertigen Kohlenwasserstoffresten C handelt es sich vorzugsweise um aliphatische lineare, cyclische oder verzweigte gegebenenfalls substituierte Reste mit mindestens zwei und insbesondere mindestens einem Kohlenstoffatom(en), vorzugsweise enthält der Kohlenwasserstoffrest maximal 22 Kohlenstoffatome und besitzt vorzugsweise die gleiche Bedeutung und bevorzugte Bedeutung wie die Reste $\mathbf{R^1}$, $\mathbf{R^2}$, $\mathbf{R^3}$, $\mathbf{R^4}$ und $\mathbf{R^5}$ mit Ausnahme des Hydroxylrests und der Alkoxyreste, daneben handelt es sich bevorzugt um substituierte Kohlenwasserstoffreste mit Hydroxy-Resten, wobei der 2-Hydroxyethylrest, der 2-Hydroxypropylrest und der 2,3-Dihydroxypropylrest besonders bevorzugt sind.

Bei den mehrwertigen Kohlenwasserstoffresten **C** handelt es sich vorzugsweise um aliphatische, cyclische oder lineare oder verzweigte gegebenenfalls substituierte Reste mit mindestens zwei und insbesondere mindestens einem Kohlenstoffatom(en), vorzugsweise enthält der Kohlenwasserstoffrest maximal 22 Kohlenstoffatome.

Beispiele für Kohlenwasserstoffreste **C** sind: Methyl-, Ethyl-, 2-Propyl-, 1-Propyl-, 2-Ethylhexyl-, Cyclohexyl-, Phenyl-, 2-Hydroxyethyl-, 2,3-Dihydroxypropyl-, 1,3-Dihydroxy-2-propyl-, 2-Hydroxy-3-propyl, 3-Hydroxy-2-propyl-, 3-Hydroxy-1-propyl-, 2-Butoxyethyl-, 2-Aminoethyl-, 1,2-Ethandiyl-, 1,2-Propandiyl-, 1,3-Propandiyl-, 1,2-Butandiyl-, 1,4-Butandiyl-, 1,5-Pentandiyl-, 1,6-Hexandiyl-, 1,8-Octandiyl-, 1,3-(2-Hydroxy)propandiyl-, 1,2-(3-Hydroxy)propandiyl-, 1,2-Cyclohexandiyl-, 1,4-Cyclohexandiyl-, 1,4-Phenylen-, 1,2,3-Propantriyl-, 2-Ethoxycarbonylethyl-.

Eine Verbindung der allgemeinen Formel (II), die als Kohlenwasserstoffrest **A** aliphatische Ketten umfasst, die eine oder mehrere Epoxygruppen tragen, kann durch Epoxidation ungesättigter aliphatischer Verbindungen erhalten werden. Beispielhaft für die geeigneten ungesättigten aliphatischen Verbindungen sind ethylenisch ungesättigte Säuren, ethylenisch ungesättigte Ester und ethylenisch ungesättigte Amide. Im allgemeinen befindet sich die ethylenisch ungesättigte Bindung nicht in der $\alpha$,ß-Position in Bezug auf ein Heteroatom in der ungesättigten aliphatischen Verbindung. Es wird weiters bevorzugt, dass die Epoxygruppe sich nicht in der ß,$\gamma$-Position in Bezug auf ein Heteroatom befindet, wenn das Heteroatom über eine Doppelbindung mit dem Kohlenstoffatom verbunden ist. Es wird weiters bevorzugt, dass die ethylenisch ungesättigten Bindungen nicht miteinander konjugiert sind, wenn die aliphatische Kette mehrere ungesättigte Bindungen aufweist. Im Allgemeinen befinden sich mehr als 2, vorzugsweise 3 gesättigte Kohlenstoffatome zwischen dem Heteroatom und der ungesättigten Bindung. Beispiele für geeignete ethylenisch ungesättigte aliphatische Verbindungen sind 4-Pentensäure, 10-Undecensäuremethylester, 6-Dodecensäuredibutylamid. Weiters sind auch ungesättigte Säuren, Ester, Urethane und Amide von Fettsäuren geeignet. Repräsentative ungesättigte Fettsäuren umfassen Lauroleinsäure, Myristoleinsäure, Palmitoleinsäure, Oleinsäure, Linolsäure, Linolensäure, Ricinolsäure, Gadoleinsäure und Erucasäure, ebenso wie ungesättigte Fettsäuren ($C_{20}$ und $C_{22}$ mit mehrfach ungesättigten Bindungen) aus Herings- oder Sardinenöl. Vorzugsweise ist die Epoxygruppe keine Endgruppe. Die Epoxygruppen in der Verbindung der allgemeinen Formel (II) umfassen hauptsächlich innere Epoxygruppen, wie in Formel (IIa) dargestellt ist:

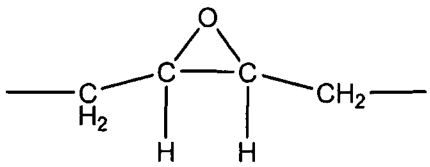

Formel IIa

Obwohl nicht erforderlich enthält die Verbindung der allgemeinen Formel (II) üblicherweise mehr als eine aliphatische Kette als Kohlenwasserstoffrest A und kann mehrere Ketten enthalten, die mindestens eine Epoxygruppe tragen. Mehrfach ungesättigte Fettsäuren, die polyepoxidiert sind, können zum Beispiel auch als Alkylester verwendet werden, wobei das Alkyl z.B. Methyl, Ethyl, Propyl, Cyclohexyl oder 2-Ethylhexyl ist.

Die durchschnittliche Funktionalität der Verbindung der allgemeinen Formel (II) ist vorzugsweise mindestens 1, besonders bevorzugt mindestens 1,7, insbesondere mindestens 2,1. Vorzugsweise ist die durchschnittliche Funktionalität niedriger als 8.

Beispiele für geeignete Verbindungen der allgemeinen Formel (II) sind teilweise oder vollständig epoxidierte ungesättigte Öle pflanzlichen oder tierischen Ursprungs oder korrespondierende epoxidierte ungesättigte Fettsäuren, die ganz oder teilweise mit Polyalkoholen verestert sind. Die Verbindungen der allgemeinen Formel (II) können z.B. ein epoxidiertes Öl und/oder natürliche Öle, die Epoxygruppen enthalten, umfassen. Bei fetten Ketten natürlichen Ursprungs ist die ethylenisch ungesättigte Bindung im Allgemeinen sieben $-CH_2$-Gruppen entfernt von einer Carbonylgruppe. Die übrigen Doppelbindungen von gegebenenfalls teilweise epoxidierten Fettsäuren können verbleiben oder z.B. durch Hydrieren und/oder weiteres Epoxidieren entfernt werden. "Fette Kette" bedeutet die aliphatische Kette einer äquivalenten Fettsäure, eines Fettalkohols oder eines Fettamins. Beispiele für geeignete Verbindungen der allgemeinen Formel (II) sind epoxidierte Öle, wobei das Öl Leinsamenöl, Sojaöl, Distelöl, Oiticika-Öl, Kümmelöl, Rapsöl, Rizinusöl, wasserfreies Rizinusöl, Baumwollsamenöl, Holzöl, Vernoniaöl (ein natürliches epoxyfunktionelles Öl), Tallöl, Sonnenblumenöl, Erdnussöl, Olivenöl, Sojablattöl, Maisöl, Fischöl, wie zum Beispiel Herings- oder Sardinenöl, und nicht cyclische Terpenöle sind. Das epoxidierte Öl ist vorzugsweise epoxidiertes Sojaöl und/oder epoxidiertes Leinsamenöl. Epoxidierte Verbindungen der allgemeinen Formel (II) schließen Diester, Triester und Oligoester von Polyalkoholen, wie Glycerin, 1,2-Propandiol, 1,2-Ethandiol, 1,3-Propandiol, 1,4-Butandiol, Polyethylenglykol (z.B. PEG 63, PEG 125, PEG 250, PEG 400), Trimethylolpropan, Pentaerythrit, Dipentaerythrit und ungesättigte Fettsäuren ein. Tallöl-Fettsäuren, sowie die Fettsäuren der oben genannten ungesättigten Öle können als Fettsäure verwendet werden. Es kann vorteilhaft sein, umgeesterte Fettsäuren zu verwenden, die aus Fettsäuren dieser Öle mit einem Monoalkohol bestehen, wenn eine Verbindung der allgemeinen Formel (II) mit einer relativ geringen Funktionalität erforderlich ist. Typische Monoalkohole sind Ethanol, t-Butanol, 1-Hexanol und 2-Ethylhexanol oder einseitig endgestopperte (Poly)ethylenglykole. Auch kann es vorteilhaft sein, umgeesterte Fettsäuren zu verwenden, die aus Fettsäuren dieser Öle mit einem Di-, Tri-, oder Polyalkohol bestehen, wobei auch Teilester zum Einsatz kommen können, bei denen nicht alle OH-Gruppen des Mehrfach-Alkohols mit Fettsäuren verestert sind.

Eine Verbindung der allgemeinen Formel (II) kann z.B. auch aus Alkoholen bestehen, die eine Epoxygruppe tragen, die mit Carbonsäuren, die eine oder mehrere Carboxylgruppen enthalten, verestert worden sind. Beispielhaft für solche Verbindungen sind Triester von Trimellithsäure und 3,4-Epoxyhexanol oder von epoxidiertem ungesättigtem Fettalkohol. Als ungesättigte Fettalkohole kann das Alkoholäquivalent einer Fettsäure verwendet werden. Weitere Verbindungen der allgemeinen Formel (II) können durch Veresterung ungesättigter Fettalkohole mit Phosphorsäure hergestellt werden. Dies kann erfolgen, indem ein Fettalkohol mit $P_2O_5$ zur Reaktion gebracht wird. Ein weiteres Verfahren beinhaltet die Umesterung des Fettalkohols mit Trimethylphosphat. Aliphatische phosphat- bzw. phosphonatfunktionelle Verbindungen der allgemeinen Formel (II) können z.B. erhalten werden, indem Phosphorsäure bzw. eine Phosphonsäure mit einem Fettalkohol zur Reaktion gebracht wird. Die ungesättigten Bindungen in den fetten Ketten können danach auf bekannte Weise epoxidiert werden. Noch andere geeignete Verbindungen der allgemeinen Formel (II) können z.B. durch die Umsetzung von Fettsäuren oder Fettaminen mit Polyglycidylverbindungen, wie z.B. Triglycidylisocyanurat oder Diglycidylterephthalat und anschließendes Epoxidieren der ethylenisch ungesättigten Bindungen auf herkömmlich Weise hergestellt werden. Weitere Verbindungen der allgemeinen Formel (II) können durch Umesterung von Fettalkoholen mit Dimethylcarbonat oder durch die Umsetzung von Phosgen mit Fettalkoholen erhalten werden, um Fettcarbonate zu erhalten, die dann auf herkömmliche Weise epoxidiert werden. Weiters können geeignete Verbindungen der allgemeinen Formel (II) durch sukzessive Umsetzung von epoxidierten Fetten mit $CO_2$ und ungesättigten Fettsäuren und anschließende Epoxidierung erhalten werden. Die dabei im ersten Schritt erhaltenen cyclischen Carbonate werden im zweiten Schritt umgeestert. Geeignete Verbindungen der allgemeinen Formel (II) schließen auch z.B. Thioester von epoxidierten Fettsäuren und Polythiolen ein. Andere Beispiele für Verbindungen der allgemeinen Formel (II) schließen Fettamide, Fetturethane oder Fettharnstoffderivate ein, die Epoxygruppen enthalten.

Amidbindungen sind vorteilhaft, weil sie z.B. die Lagerstabilität von Beschichtungs-Abmischungen und daraus hergestellten Beschichtungen erhöhen können. Fettamide können einfach durch Umsetzung ungesättigter Fettsäuren mit Di-, Tri- oder Polyaminen hergestellt werden. Beispiele für geeignete Amine sind unter anderem 1,2-Diaminoethan, 1,6-Diaminohexan, 1,4-Cyclohexandimethylamin, Isophorondiamin, 1,4-Diaminobutan und 1,5-Diamino-2-ethylaminopentan. Die ungesättigten Fettamide können dann auf herkömmliche Weise epoxidiert werden. Ein weiteres Verfahren zur Herstellung geeigneter Fettamide umfasst die Umsetzung von Fettaminen mit Polysäuren, wie z.B. Terephthalsäure, Isophthalsäure, Trimellithsäure oder 1,4-Cyclohexandicarbonsäure. Die ungesättigten Fettamide werden dann auf herkömmliche Weise epoxidiert. Fetturethane können durch Umsetzung ungesättigter Fettalkohole mit Di-, Tri- oder Polyisocyanaten und anschließender Epoxidierung der ungesättigten fetten Ketten hergestellt werden. Fettharnstoffverbindungen können durch Umsetzung ungesättigter Fettamine mit Di-, Tri- oder Polyisocyanaten und anschließender Epoxidierung der fetten Ketten hergestellt werden. Es kann eine Reihe von Polyisocyanaten verwendet werden. Darunter sind Hexamethylendiisocyanat (HMDI) oder dessen Trimer, Isophorondiisocyanat (IPDI) oder dessen Trimer, Diphenylmethandiisocyanat (MDI), Dicyclohexanmethandiisocyanat, Toluol-2,4-diisocyanat (TDI) und Tetramethylxylendiisocyanat (TMXDI) ziemlich geeignet. Modifizierte epoxidierte Öle oder epoxidierte Alkydharze können ebenfalls verwendet werden. Die Öle können z.B. mit mono- und/oder polyfunktionellen epoxyreaktiven Verbindungen modifiziert sein. Beispiele für solche epoxyreaktiven Verbindungen sind Verbindungen, die Carbonsäuregruppen enthalten, Verbindungen, die Anhydridgruppen enthalten, Verbindungen, die Amingruppen enthalten, oder Bisphenole. Beispiele für diese epoxyreaktiven Verbindungen sind Phthalsäure, Isophthalsäure, para-tert.-Butylbenzoesäure, Terephthalsäure, Benzoesäure und Adipinsäure, Phthalsäureanhydrid, Hexahydrophthalsäureanhydrid, Tetrahydrophthalsäureanhydrid, Bernsteinsäureanhydrid, Kombinationen solcher Anhydride, 1,4-Diaminobutan und 1,6-Diaminohexan und Bisphenol-A. Eine andere geeignete Modifikation beinhaltet die Urethanisierung eines Öles, das z.B. eine Hydroxylgruppe enthält, wie Rizinusöl, mit Mono- und Diisocyanaten, wonach die oligomeren Öl-Urethane auf herkömmliche Weise epoxidiert werden. Andere geeignete modifizierte Verbindungen der allgemeinen Formel (II) sind z.B. epoxidierte urethanisierte Öle. Geeignete Produkte werden vorzugsweise durch einstufige oder zweistufige Umesterung epoxidierter Öle mit Mischungen von Polyalkoholen und Di- oder Polyalkylestern von Di- oder Polycarbonsäuren erhalten. Z.B. kann zuerst der Methylester von 4-Hexensäure epoxidiert werden, wonach das resultierende epoxidierte Öl mit einer äquimolaren Menge Trimethylolpropan umgeestert wird, wobei Methanol abdestilliert wird. Danach kann der Trimethylolpropanester von 4,5-Epoxyhexansäure mit Dimethylterephthalsäure weiter verestert werden, wobei Methanol abdestilliert wird. Das Ergebnis ist ein epoxidiertes Alkydharz. Auf analoge Weise kann ein epoxidiertes Öl z.B. mit Pentaerythrit und gleichzeitig oder anschließend mit Dimethyladipat umgeestert werden. Es können auch Mischungen der hier beschriebenen Verbindungen der allgemeinen Formel (II) verwendet und zu vorgewählten Verhältnissen kombiniert werden. Das vorgewählte Verhältnis wird von der gewünschten Anwendung abhängen.

Außerdem kann 2,3-Epoxy-3-phenylpropansäure-ethylester (Ethylphenylglycidat, EPG) zum Einsatz kommen.

Der Epoxy-Sauerstoffgehalt der Verbindung der allgemeinen Formel (II) ist im Allgemeinen größer als 1 Gewichts-%, vorzugsweise größer als 2 Gewichts-%. Im Allgemeinen wird der Epoxy-Sauerstoffgehalt geringer als 20 Gew.-% sein, in der Praxis geringer als 15 Gew.-%.

Das molare Äquivalenzverhältnis zwischen den Epoxyfunktionen in den Verbindungen der allgemeinen Formel (II) und den Aminfunktionen der Verbindung der allgemeinen Formel (I) liegt vorzugsweise zwischen 1 und 50. Es beträgt vorzugsweise höchstens 40, besonders bevorzugt höchstens 30, insbesondere höchstens 25 und vorzugsweise mindestens 1,5, besonders bevorzugt mindestens 3, insbesondere mindestens 5.

Aus diesen Randbedingungen und der Konzentration der Aminfunktionen in den Verbindungen der allgemeinen Formel (I) und der Konzentration der Epoxyfunktionen in den Verbindungen der allgemeinen Formel (II), ergibt sich das in die Farbe eingesetzte bevorzugte Massenverhältnis der beiden Komponenten.

Die Konzentration an den aus der Verbindung der allgemeinen Formel (II) stammenden Epoxyfunktionen in den witterungsbeständigen Anstrichen und Beschichtungen liegt vorzugsweise im Bereich zwischen 10 und 0,05 mmol/100g. Sie beträgt vorzugsweise höchstens 5 mmol/100g, besonders bevorzugt höchstens 2 mmol/100g insbesondere höchstens 1,5 mmol/100g und vorzugsweise mindestens 0,1 mmol/100g, besonders bevorzugt mindestens 0,2 mmol/100g insbesondere mindestens 0,3 mmol/100g.

Aus dieser Randbedingung ermittelt sich die Zusatzmenge der beiden Verbindungen der allgemeinen Formeln (I) und (II) zu den witterungsbeständigen Anstrichen und Beschichtungen, die gemäß der kommerziell verfügbaren Verbindungen der allgemeinen Formeln (I) und (II) typischerweise im Bereich zwischen 0,1 und 5 Gewichtsteile bezogen auf 100 Gewichtsteile Farbe für beide Komponenten liegt.

Die beiden Komponenten der allgemeinen Formeln (I) und (II) können den witterungsbeständigen Anstrichen und Beschichtungen getrennt oder als Mischung zugesetzt werden. Sie werden vorzugsweise pur, als Lösung in einem Lösungsmittel oder in Form einer wässrigen Emulsion eingesetzt.

Als Lösungsmittel kommen alle gängigen organischen und anorganischen Lösungsmittel oder Gemische davon in Frage, die keine unerwünschte Reaktion mit den Verbindungen der allgemeinen Formeln (I) und (II) eingehen, wie aromatische oder aliphatische gegebenenfalls halogenierte Kohlenwasserstoffe, Alkohole, Ester, Ether, Amide, Sulfone, Alkoxysilane und Siloxane z.B. Alkane, wie Pentan, Hexan, Heptan, Isohexan, Isooctan oder Alkangemische, Benzol, Toluol, Xylole, Chlorbenzol, Dichlormethan, Methanol, Ethanol, Isopropanol, 1-Butanol, Essigsäureethylester, Fettsäureester oder deren Umesterungsprodukte z.B. basierend auf Pflanzenölen, Butyrolacton, Tetrahydrofuran, Dibutylether, Methyl-tert.-butylether, N,N-Dimethylacetamid, Sulfolan, Dimethylsulfoxid, Tetraethoxysilan, Methyltriethoxysilan, Hexamethyldisiloxan, Octamethylcyclotetrasiloxan. Sofern Lösungen oder Emulsionen eingesetzt werden beträgt der Wirkstoffanteil, d.h. der Anteil der beiden puren Verbindungen der allgemeinen Formeln (I) und (II) vorzugsweise mindestens 1 Gew.-%, besonders bevorzugt mindestens 10 Gew.-% insbesondere mindestens 30 Gew.-% und vorzugsweise höchstens 95 Gew.-%, besonders bevorzugt höchstens 70 Gew.-%, insbesondere höchstens 55 Gew.-% jeweils bezogen auf 100 Gewichtsteile der Lösung oder der Emulsion.

Falls keine ausreichende Selbstemulgierbarkeit der Additive der allgemeinen Formeln (I) und (II) vorliegt, können zur Herstellung von Emulsionen Emulgatoren oder Schutzkolloide zugesetzt werden. Dabei handelt es sich vorzugsweise um an sich bekannte Emulgatoren. Als anionische Emulgatoren eignen sich besonders:

1. Alkylsulfate, besonders solche mit einer Kettenlänge von 8 bis 18 C-Atomen, Alkyl- und Alkylethersulfate mit 8 bis 18 C-Atomen im hydrophoben Rest und 1 bis 40 Ethylenoxid(EO)- bzw. Propylenoxid(PO)-Einheiten.
2. Sulfonate, besonders Alkylsulfonate mit 8 bis 18 C-Atomen, Alkylarylsulfonate mit 8 bis 18 C-Atomen, Tauride, Ester und Halbester von Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:

5. Polyvinylalkohol, der noch 5 bis 50%, vorzugsweise 8 bis 20% Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere,vorzugsweise solche mit 8 bis 40 EO- bzw. PO-Einheiten,
9. Additionsprodukte von Alkylaminen mit Alkylresten von 8 bis 22 C-Atomen mit Ethylenoxid oder Propylenoxid
10. Fettsäuren mit 6 bis 24 C-Atomen.
11. Alkylpolyglykoside der allgemeinen Formel $\mathbf{R^*\text{-}O\text{-}Z_u}$, worin R* einen linearen oder verzweigten,gesättigten oder ungesättigten Alkylrest mit im Mittel 8- 24 C-Atomen und $\mathbf{Z_u}$ einen Oligoglykosidrest mit im Mittel u = 1-10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Emulgatoren eignen sich besonders:

14. Salze von primären, sekundären und tertiären Fettaminen mit 8 bis 24 C-Atomen mit Essigsäure, Schwefelsäure, Salzsäure und Phosphorsäuren.
15. Quartenäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als ampholytische Emulgatoren eignen sich besonders:

17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammoniumsalze mit einem $C_8$-$C_{18}$-Acylrest und Alkylimidazolium-Betaine.

Bevorzugt als Emulgatoren sind nicht ionische Emulgatoren, insbesondere die vorstehend unter 6. aufgeführten Alkylpolyglycolether, die unter 9. aufgeführten Additionsprodukte von Alkylaminen mit Ethylenoxid oder Propylenoxid, die unter 11. aufgeführten Alkylpolyglykoside und der unter 5. aufgeführte Polyvinylalkohol.
Besonders bevorzugte Polyvinylalkohole enthalten noch 5 bis 20%,insbesondere 10 bis 15% Vinylacetateinheiten und weisen vorzugsweise einen Polymerisationsgrad von 500 bis 3000, insbesondere von 1200 bis 2000 auf.

Der Anteil des Emulgators in den Emulsionen der Verbindungen der allgemeinen Formeln (I) und (II) beträgt vorzugsweise 0,1 bis 5 Gew.-%, insbesondere 0,2 bis 2 Gew.-%, speziell 0,3 bis 1 Gew.-%. Vorteilhaft ist der geringe Bedarf an Emulgator der ja kein hydrophobierender Wirkstoff ist.

Unabhängig von der Formulierungsart können auch Mischungen verschiedener Verbindungen der allgemeinen Formel (I) und/oder Mischungen von Verbindungen der allgemeinen Formel (II) eingesetzt werden.

Die beiden Komponenten (I) und (II) besitzen eine ausgezeichnete Verträglichkeit, sodass sie vor ihrem Einsatz in Farben als Mischung gelagert werden können. Es können auch Mischungen verschiedener Verbindungen der allgemeinen Formel (I) mit einer Verbindung der allgemeinen Formel (II) oder Mischungen verschiedener Verbindungen der allgemeinen Formel (II) mit einer Verbindung der allgemeinen Formel (I) oder Mischungen aus Verbindungen der allgemeinen Formel (I) mit Mischungen aus Verbindungen der allgemeinen Formel (II) eingesetzt werden. Dabei spielt es keine Rolle, ob eine oder beide Komponenten oder Mischungen mit einem oder mehreren Bestandteilen der witterungsbeständigen Anstriche und Beschichtungen vorgemischt und gelagert werden, wenn dies Vorteile hat. Denkbar sind z.B. Mischungen mit Emulgatoren, Bioziden, Polymerdispersionen, Rheologieadditiven oder Füllstoffen. Sofern die erfindungsgemäßen Mischungen in Form ihrer wässrigen Emulsion gelagert werden empfiehlt sich der Zusatz von Bioziden zur Erhöhung der Lagerstabilität. Zusätzlich können weitere Additive den Emulsionen zugesetzt werden, wie z.B. Geruchsstoffe, Korrosionsinhibitoren, Puffersubstanzen und Entschäumer. Die bevorzugte Menge an Zusatzstoffen beträgt vorzugsweise nicht mehr als 3 Gew.-%, besonders bevorzugt nicht mehr als 1 Gew.-%, insbesondere höchstens 0,5 Gew.-%.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C. Alle Viskositäten wurden bei 25°C und 0,10 MPa gemessen.

Herstellung der Dispersionsfarbe A 743 vermischt werden in einem handelsüblichen, schnelllaufenden Rührwerk zur Herstellung von wässrigen Bautenbeschichtungen in dieser Reihenfolge:

Tabelle 1: Herstellung Dispersionsfarbe A 743

| | |
|---|---|
| 277,7 Gew.-Teile | Wasser |
| 3,2 Gew.-Teile | Verdicker auf Basis Celluloseether |
| 4,2 Gew.-Teile | Dispergiermittel |
| 12,7 Gew.-Teile | Fungizid |
| 3,2 Gew.-Teile | Entschäumer |
| 10,6 Gew.-Teile | Filmbildehilfsmittel |
| 127,2 Gew.-Teile | Titandioxid |
| 312,7 Gew.-Teile | nodularer Füllstoff |
| 42,4 Gew.-Teile | lamellarer Füllstoff |
| 12,7 Gew.-Teile | mattierender Füllstoff |

(fortgesetzt)

| | |
|---|---|
| 1,0 Gew.-Teile | pH-Einstellung mit Natronlauge |
| 190,8 Gew.-Teile | einer ca. 50%igen Polymer-Dispersion auf Basis Vinylacetat, Ethylen und Vinylchlorid (VINNAPAS® CEZ 18 von Wacker Chemie AG) |
| 2,1 Gew.-Teile | Rheologieadditiv |
| ergibt: | |
| 1000 Gew.-Teile | Dispersionsfarbe |

Der gemäß Tabelle 1 zusammengesetzten Dispersionsfarbe A743 werden Emulsionen in den in der Tabelle 2 angegebenen Mengen durch Einrühren zugesetzt.

Als Verbindung der allgemeinen Formel (I) kommt folgendes Produkt zum Einsatz:

**Öl L 652** (WACKER Chemie AG) = aminofunktionelles Siliconöl zusammengesetzt aus Dimethylsiloxy- und N-(2-Aminoethyl)-aminopropyl-siloxy-Einheiten (T-Einheiten) und ca. 0,13 Gew.-% Rest-Methoxygehalt, Aminzahl = 0,15 meq/g, Viskosität ~ 700 $mm^2/s$

**SILRES® BS 1306** (WACKER Chemie AG) = 50% ige wässrige Emulsion von Öl L 652 (enthält 5 Gew.-% Emulgator)

Als Verbindungen der allgemeinen Formel (II) kommen folgende Produkte zum Einsatz:

**ELSO** = Dehysol® B316 (BASF) = epoxidiertes Leinöl (6,51 mol/kg Epoxy-Sauerstoff)

**ESBO** = Dehysol® D81 (BASF/Emery Oleochemicals) = epoxidiertes Sojabohnenöl (4,58 mol/kg Epoxy-Sauerstoff)

**EPG** = Ethyl-3-phenylglycidat (Aldrich) (5,2 mol/kg Epoxy-Sauerstoff)

**EOD** = Vikoflex® 4050 (Arkema) = Mischung aus 32 Gew.-% des Methylesters und 68 Gew.-% des 2-Ethylhexylesters eines epoxidierten Fettsäureesters mit ca. 18 C-Atomen (3,8 mol/kg Epoxy-Sauerstoff)

Als nicht erfindungsgemäße Verbindungen kommen für Vergleichsversuche zum Einsatz:

**PDMS** = OH-endständiges Polydimethylsiloxan (Kettenlänge ca. 45) von WACKER Chemie AG

**WR 1100** (WACKER Chemie AG) = aminofunktionelles Siliconöl zusammengesetzt aus Dimethylsiloxy- und N-(2-Aminoethyl)-aminopropyl-methyl-siloxy-Einheiten (D-Einheiten) und ca. 0,14 Gew.-% Rest-Methoxygehalt, Aminzahl = 0,15 meq/g, Viskosität ~ 3000 $mm^2/s$.

**Leinöl** = kommerzielles Leinsamenöl

Herstellung der Emulsionen aus den Verbindungen der allgemeinen Formeln (I) und (II)

Vermischt werden in einem handelsüblichen, schnelllaufenden Rührwerk zur Herstellung von wässrigen Emulsionen in dieser Reihenfolge:

| Emulsion | |
|---|---|
| 25,00 Gew.-Teile | Emulgator (Arlypon IT 5 und Arlypon IT 10/80 erhältlich bei Clariant) |
| 17,50 Gew.-Teile | Wasser |
| 248,80 Gew.-Teile | Wirkstoffgemisch |
| 207,50 Gew.-Teile | Wasser |
| 1,20 Gew.-Teile | Konservierer (Konservierer MIT 10 und Konservierer BIT 10 erhältlich bei Thor |
| | |
| gesamt: | |
| 500 Gew.-Teile | |

Die wässrige Emulsion wird dadurch hergestellt, dass zunächst 1/10 des Wassers mit dem Emulgator vermischt wird. Anschließend wird portionsweise das Gemisch aus epoxidiertem Öl und aminofunktionellem Polydimethylsiloxan zugegeben. Danach wird sehr langsam das Wasser in die steife Phase der Mischung eingerührt, bis die Emulsion wieder dünnflüssig ist. In der letzten Portion Wasser wird der Konservierer mit in die Mischung eingebracht.

Ermittelte Kenngrößen:

An jeweils vier Kalksandsteinen (nach DIN 106) wird die Wasserdurchlässigkeitsrate (w24-Wert in $kg/m^2h^{0,5}$ nach DIN EN 1062-3) bestimmt. Zur Überprüfung der Farbstabilität (Vegilbungstest) erfolgt an der ausgehärteten Farbe jeweils eine Farbmessung vor und nach UV-Belastung mit dem BYK Gardener Spectro-Guide gemäß DIN 6174. Dabei wird jeweils die Differenz der b-Werte (Δb-Wert) ausgewiesen.

Tabelle 2: Ergebnisse

| Nr. | Additiv (Zusatzmenge jeweils 2 Gew.-Teile Emulsion oder 1 Gew.-Teil Wirkstoff (pur) auf 100 Gew.-Teile Farbe A743) | Wasserdurchlässigkeitsrate **w24-Wert** [$kg/m^2 \sqrt{h}$] | Farbmessung (Δb) | Wasser-Kontaktwinkel nach QUV-B-Behandlung [°] |
|---|---|---|---|---|
| 1* | A743 ohne Additiv | 0,97 | 0,61 | 117 |
| 2* | SILRES® BS 1306 | 0,27 | 0,77 | 140 |

(fortgesetzt)

| Nr. | Additiv (Zusatzmenge jeweils 2 Gew.-Teile Emulsion oder 1 Gew.-Teil Wirkstoff (pur) auf 100 Gew.-Teile Farbe A743) | Wasserdurchlässigkeitsrate **w24-Wert** [kg/m$^2$ $\sqrt{h}$] | Farbmessung ($\Delta$b) | Wasser-Kontaktwinkel nach QUV-B-Behandlung [°] |
|---|---|---|---|---|
| 3* | Öl L652 (pur) | 0,38 | 0,61 | 132 |
| 4* | ELSO | 0,48 | 0,60 | 38 |
| 5 | ELSO : L652 = 1:4 | 0,17 | 0,88 | 134 |
| 6 | ELSO : L652 = 1:12 | 0,15 (0,16)[1)] | -- | 135 |
| 7* | Leinöl : L652 = 1:12 | 0,32 | -0,07 | 131 |
| 8* | PDMS : L652 = 1:4 | 0,92 | -- | -- |
| 9 | ESBO : L652 = 1:4 | 0,21 | -- | -- |
| 10* | ESBO : PDMS = 1:4 | 0,86 | -- | -- |
| 11* | EOD | 0,93 | -- | -- |
| 12 | EOD : L652 = 1:4 | 0,17 | -- | -- |
| 13* | EPG (pur) | 0,90 | 0,89 | 118 |
| 14 | EPG : L652 = 1:4 | 0,17 | 0,95 | 134 |
| 15 | EPG : L652 = 1:12 | 0,20 | 0,82 | 135 |
| 16* | WR 1100 (emulgiert) | 0,30 | 0,78 | 140 |
| 17* | ELSO : WR 1100 = 1:12 | 0,33 | 0,36 | 135 |

[1)] nach 6 Monaten Lagerung der Emulsion bei Raumtemperatur
* nicht erfindungsgemäss

Erläuterungen: Beispiele 2,3,4,7,8,10,11,13,16,17 dienen zum Vergleich, um zu verdeutlichen, dass die Verringerung des w24-Wertes nur durch die erfindungsgemäße Kombination aus Epoxid-Öl und Aminosiloxan zustandekommt. Ersatz von L652 durch das aminfreie PDMS (10), Ersatz von Epoxid durch PDMS (8), sowie Ersatz von ELSO durch das analoge epoxidfreie Leinöl (7) liefern deutlich höhere W24-Werte als die entsprechenden erfindungsgemäßen WirkstoffMischungen (10 -> 9; 8 -> 5,9,12,14; 7 -> 6). Ebenso ist der Einsatz der reinen Einzelstoffe weniger effizient als die Kombination beider Komponenten (2,3,4,11,13). Gegenüber dem analogen Aminöl WR 1100, das die Aminfunktionen an D-Einheiten (difunktionellen Siloxy-Einheiten) trägt, ist die Kombination von ELSO mit L652 signifikant wirksamer (17 -> 6), obwohl die beiden Aminöle pur einen geringeren Unterschied aufweisen (16 - > 2). Eine Vergilbung i.Vgl. zur unadditivierten Farbe wird in keinem Fall beobachtet. Nach QUV-B-Behandlung stellt sich ein deutlicher Abperleffekt ein.

## Patentansprüche

1. Mischungen aus Organosiloxanen der allgemeinen Formel (I)

$$\mathbf{M_m D_n T_o Q_p} \qquad \textbf{(I)},$$

bei der

**M** eine terminale Gruppe der allgemeinen Formel (Ia)

$$R^1R^2R^3SiO_{1/2} \qquad (Ia),$$

**D** eine difunktionelle Gruppe der allgemeinen Formel (Ib)

$R^4R^5SiO_{2/2}$ (Ib),

**T** eine trifunktionelle Gruppe der allgemeinen Formel (Ic)

$R^6SiO_{3/2}$ (Ic),

**Q** eine Einheit der allgemeinen Formel $SiO_{4/2}$ bedeuten,
wobei **$R^1$, $R^2$, $R^3$, $R^4$, $R^5$ und $R^6$** unabhängig voneinander für einen Kohlenwasserstoffrest mit 1 bis 20 C-Atomen, der Heteroatome enthalten kann, den Hydroxyrest oder Alkoxyreste mit 1 bis 10 C-Atomen stehen, wobei mindestens ein Kohlenwasserstoffrest **$R^6$** mindestens eine Aminfunktion enthält, und höchstens 25% aller Reste Hydroxy- oder Alkoxyreste sind,
**m** eine ganze Zahl von 0-20,
**n** eine ganze Zahl von 0-1000,
**o** eine ganze Zahl von 1-30,
**p** eine ganze Zahl von 0-20 und
**m + n + o + p** eine ganze Zahl von mindestens 2 bedeuten,
mit Epoxiden der allgemeinen Formel (II)

**$(A\text{-}B)_qC$** **(II)**

bei der

**A** unabhängig voneinander für einen einwertigen linearen oder verzweigten Kohlenwasserstoffrest mit 1 bis 30 C-Atomen steht, der durch Heteroatome substituiert sein kann, der von Heteroatomen unterbrochen sein kann und der eine oder mehrere Epoxyfunktion enthalten kann,
**B** unabhängig voneinander für eine zweiwertige Ether-, Carbonat- oder Harnstofffunktion oder eine Säure-, Ester-, Urethan-, Säureanhydrid- oder Amidfunktion einer Carbonsäure, Thiocarbonsäure, Sulfonsäure, Phosphonsäure oder Phosphorsäure steht,
**q** eine Zahl von 1 bis 8 bedeutet,
**C** einen **q**-wertigen linearen oder verzweigten Kohlenwasserstoffrest mit einem bis 30 C-Atomen, der Heteroatome enthalten kann, der eine oder mehrere Epoxyfunktionen enthalten kann, bedeutet, mit der Maßgabe, dass die Verbindung der allgemeinen Formel (II) mindestens eine Epoxyfunktion enthält.

2. Mischungen nach Anspruch 1, bei denen **$R^1$**, **$R^2$**, **$R^3$**, **$R^4$** und **$R^5$** ausgewählt werden aus Methyl-, Ethyl-, Propyl-, 3,3,3-Trifluorpropyl-, Vinyl-, Phenyl-, Hydroxyl-, Methoxy- und Ethoxyrest.

3. Mischungen nach Anspruch 1 oder 2, bei denen die Aminfunktion an **$R^6$** die Formel **$-NR^{10}R^{11}$** aufweist, wobei **$R^{10}$** und **$R^{11}$** die Bedeutungen von **$R^1$**, **$R^2$**, **$R^3$**, **$R^4$** und **$R^5$** gemäss Anspruch 1 oder 2 aufweisen, ausgenommen der Hydroxyrest und Alkoxyreste, oder für Wasserstoff stehen.

4. Mischungen nach Anspruch 1 bis 3, bei denen **$R^6$** die Formel **$-CH_2-CH_2-CH_2-NH-CH_2-CH_2-NH_2$** aufweist.

5. Mischungen nach Anspruch 1 bis 4, bei denen die Aminkonzentration in den Verbindungen der allgemeinen Formel (I) im Bereich von 0,01 bis 10 mol/kg liegt.

6. Mischungen nach Anspruch 1 bis 5, bei denen sich die Epoxyfunktionen in den Kohlenwasserstoffresten A befinden.

7. Mischungen nach Anspruch 1 bis 6, bei denen die Einheit B eine Säure-, Ester-, Urethan-, Säureanhydrid- oder Amidfunktion einer Carbonsäure ist.

8. Mischungen nach Anspruch 1 bis 7, bei denen sich C von funktionellen Verbindungen **F** ableitet, die formal in der Lage sind, mit Säuren unter Bildung von Ester-, Amid-, Urethan- oder Säureanhydrid-Gruppen zu reagieren.

9. Mischungen nach Anspruch 1 bis 8, bei denen die Verbindungen der allgemeinen Formel (II) ausgewählt werden aus epoxidierten ungesättigten Ölen pflanzlichen oder tierischen Ursprungs oder aus epoxidierten ungesättigten Fettsäuren pflanzlichen oder tierischen Ursprungs, die ganz oder teilweise mit Polyalkoholen verestert sind.

10. Mischungen nach Anspruch 1 bis 9, bei denen der Epoxy-Sauerstoffgehalt der Verbindung der allgemeinen Formel

(II) größer als 1 Gewichts-% und geringer als 20 Gew.-% ist.

**11.** Mischungen nach Anspruch 1 bis 10, bei denen das molare Äquivalenzverhältnis zwischen den Epoxyfunktionen in den Verbindungen der allgemeinen Formel (II) und den Aminfunktionen der Verbindungen der allgemeinen Formel (I) zwischen 1 und 50 liegt.

**12.** Verwendung der Mischungen gemäss Anspruch 1 bis 11 als hydrophobierendes Additiv für witterungsbeständige Anstriche und Beschichtungen.

**13.** Witterungsbeständige Anstriche und Beschichtungen, enthaltend die Mischungen gemäss Anspruch 1 bis 11.

**Claims**

**1.** Mixtures of organosiloxanes of the general formula (I)

$$\mathbf{M_m D_n T_o Q_p} \qquad \mathbf{(I),}$$

in which

**M** is a terminal group of the general formula (Ia)

$$R^1R^2R^3SiO_{1/2} \qquad (Ia),$$

**D** is a difunctional group of the general formula (Ib)

$$R^4R^5SiO_{2/2} \qquad (Ib),$$

**T** is a trifunctional group of the general formula (Ic)

$$R^6SiO_{3/2} \qquad (Ic),$$

**Q** is a unit of the general formula $SiO_{4/2}$,
where $\mathbf{R^1}$, $\mathbf{R^2}$, $\mathbf{R^3}$, $\mathbf{R^4}$, $\mathbf{R^5}$ and $\mathbf{R^6}$ independently of one another stand for a hydrocarbon radical having 1 to 20 C atoms, which may contain heteroatoms, or stand for the hydroxyl radical or alkoxy radicals having 1 to 10 C atoms, where at least one hydrocarbon radical $\mathbf{R^6}$ contains at least one amine function, and not more than 25% of all of the radicals are hydroxyl or alkoxy radicals,
**m** is an integer 0-20,
**n** is an integer 0-1000,
**o** is an integer 1-30,
**p** is an integer 0-20, and
**m + n + o + p** is an integer which is at least 2, with epoxides of the general formula (II)

$$\mathbf{(A\text{-}B)qC} \qquad \mathbf{(II)}$$

in which

**A** independently at each occurrence is a monovalent linear or branched hydrocarbon radical having 1 to 30 C atoms, which may be substituted by heteroatoms, which may be interrupted by heteroatoms, and which may contain one or more epoxy function,
**B** independently at each occurrence is a divalent ether, carbonate, or urea function or is an acid, ester, urethane, acid-anhydride, or amide function of a carboxylic acid, thiocarboxylic acid, sulfonic acid, phosphonic acid, or phosphoric acid,
**q** is a number from 1 to 8,
**C** is a **q**-valent linear or branched hydrocarbon radical having one to 30 C atoms, which may contain heteroatoms, and which may contain one or more epoxy functions, with the proviso that the compound of the general formula (II) comprises at least one epoxy function.

2. Mixtures acccording to Claim 1, wherein $R^1$, $R^2$, $R^3$, $R^4$, and $R^5$ are selected from methyl, ethyl, propyl, 3,3,3-trifluoropropyl, vinyl, phenyl, hydroxyl, methoxy, and ethoxy radical.

3. Mixtures acccording to Claim 1 or 2, wherein the amine function on $R^6$ has the formula **$-NR^{10}R^{11}$,** where $R^{10}$ and $R^{11}$ have the definitions of $R^1$, $R^2$, $R^3$, $R^4$, and $R^5$ acccording to Claim 1 or 2, with the exception of the hydroxyl radical and alkoxy radicals, or stand for hydrogen.

4. Mixtures acccording to Claim 1 to 3, wherein $R^6$ has the formula **$-CH_2-CH_2-CH_2-NH-CH_2-CH_2-NH_2$.**

5. Mixtures acccording to Claim 1 to 4, wherein the amine concentration in the compounds of the general formula (I) is in the range from 0.01 to 10 mol/kg.

6. Mixtures acccording to Claim 1 to 5, wherein the epoxy functions are located in the hydrocarbon radicals **A.**

7. Mixtures acccording to Claim 1 to 6, wherein the unit **B** is an acid, ester, urethane, acid-anhydride, or amide function of a carboxylic acid.

8. Mixtures acccording to Claim 1 to 7, wherein **C** derives from functional compounds **F** which are formally capable of reacting with acids to form ester, amide, urethane, or acid-anhydride groups.

9. Mixtures acccording to Claim 1 to 8, wherein the compounds of the general formula (II) are selected from epoxidized unsaturated oils of vegetable or animal origin or from epoxidized unsaturated fatty acids of vegetable or animal origin which have been wholly or partly esterified with polyalcohols.

10. Mixtures acccording to Claim 1 to 9, wherein the epoxy oxygen content of the compound of the general formula (II) is greater than 1 weight% and less than 20 wt%.

11. Mixtures acccording to Claim 1 to 10, wherein the molar equivalents ratio between the epoxy functions in the compounds of the general formula (II) and the amine functions of the compounds of the general formula (I) is between 1 and 50.

12. Use of the mixtures acccording to Claim 1 to 11 as a hydrophobizing additive for weathering-resistant paints and coatings.

13. Weathering-resistant paints and coatings comprising the mixtures acccording to Claim 1 to 11.

**Revendications**

1. Mélanges d’organosiloxanes de formule générale (I)

$$M_mD_nT_oQ_p \qquad (I),$$

dans laquelle

**M** représente un groupe terminal de formule générale (Ia)

$$R^1R^2R^3SiO_{1/2} \qquad (Ia),$$

**D** représente un groupe difonctionnel de formule générale (Ib)

$$R^4R^5SiO_{2/2} \qquad (Ib),$$

**T** représente un groupe trifonctionnel de formule générale (Ic)

$$R^6SiO_{3/2} \qquad (Ic),$$

**Q** représente une unité de formule générale $SiO_{4/2}$,

**$R^1$**, **$R^2$**, **$R^3$**, **$R^4$**, **$R^5$** et **$R^6$** représentant indépendamment les uns des autres un radical hydrocarboné ayant de 1 à 20 atomes de carbone, qui peut contenir des hétéroatomes, le radical hydroxy ou des radicaux alcoxy ayant de 1 à 10 atomes de carbone, au moins un radical hydrocarboné **$R^6$** contenant au moins une fonction amine, et au maximum 25 % de tous les radicaux étant des radicaux hydroxy ou alcoxy,
**m** représente un nombre entier valant 0-20,
**n** représente un nombre entier valant 0-1000,
**o** représente un nombre entier valant 1-30,
**p** représente un nombre entier valant 0-20 et
**m + n + o + p** représente un nombre entier valant au moins 2, avec des époxydes de formule générale (II)

**(A-B)qC** **(II)**

dans laquelle

> **A** représente chaque fois indépendamment un radical hydrocarboné monovalent linéaire ou ramifié ayant de 1 à 30 atomes de carbone, qui peut être substitué par des hétéroatomes, qui peut être interrompu par des hétéroatomes et qui peut contenir une ou plusieurs fonctions époxy,
> **B** représente chaque fois indépendamment une fonction divalente éther, carbonate ou urée ou une fonction acide, ester, uréthane, anhydride d'acide ou amide d'un acide carboxylique, thiocarboxylique, sulfonique, phosphonique ou phosphorique,
> **q** représente un nombre valant de 1 à 8,
> **C** représente un radical hydrocarboné **q**-valent linéaire ou ramifié ayant de un à 30 atomes de carbone, qui peut contenir des hétéroatomes, qui peut contenir une ou plusieurs fonctions époxy, étant entendu que le composé de formule générale (II) contient au moins une fonction époxy.

2. Mélanges selon la revendication 1, dans lesquels **$R^1$**, **$R^2$**, **$R^3$**, **$R^4$** et **$R^5$** sont choisis parmi les radicaux méthyle, éthyle, propyle, 3,3,3-trifluoropropyle, vinyle, phényle, hydroxy, méthoxy et éthoxy.

3. Mélanges selon la revendication 1 ou 2, dans lesquels la fonction amine sur **$R^6$** présente la formule **$-NR^{10}R^{11}$**, **$R^{10}$** et **$R^{11}$** ayant les significations de **$R^1$**, **$R^2$**, **$R^3$**, **$R^4$** et **$R^5$** selon la revendication 1 ou 2, à l'exclusion du radical hydroxy et des radicaux alcoxy, ou représentant un atome d'hydrogène.

4. Mélanges selon l'une quelconque des revendications 1 à 3, dans lesquels **$R^6$** présente la formule **$-CH_2-CH_2-CH_2-NH-CH_2-CH_2-NH_2$.**

5. Mélanges selon l'une quelconque des revendications 1 à 4, dans lesquels la concentration d'amine dans les composés de formule générale (I) se situe dans la plage de 0,01 à 10 moles/kg.

6. Mélanges selon l'une quelconque des revendications 1 à 5, dans lesquels les fonctions époxy se trouvent dans les radicaux hydrocarbonés **A.**

7. Mélanges selon l'une quelconque des revendications 1 à 6, dans lesquels l'unité **B** est une fonction acide, ester, uréthane, anhydride d'acide ou amide d'un acide carboxylique.

8. Mélanges selon l'une quelconque des revendications 1 à 7, dans lesquels C dérive de composés fonctionnels **F** qui sont d'après leur formule capables de réagir avec des acides, avec formation de groupes ester, amido, uréthane ou anhydride d'acide.

9. Mélanges selon l'une quelconque des revendications 1 à 8, dans lesquels les composés de formule générale (II) sont choisis parmi des huiles insaturées époxydées d'origine végétale ou animale ou des acides gras insaturés époxydés d'origine végétale ou animale, qui sont partiellement ou totalement estérifiés avec des polyalcools.

10. Mélanges selon l'une quelconque des revendications 1 à 9, dans lesquels la teneur en oxygène en fonction époxy du composé de formule générale (II) est supérieure à 1 % en poids et inférieure à 20 % en poids.

11. Mélanges selon l'une quelconque des revendications 1 à 10, dans lesquels le rapport d'équivalents molaires entre les fonctions époxy dans les composés de formule générale (II) et les fonctions amine des composés de formule générale (I) est compris entre 1 et 50.

12. Utilisation des mélanges selon l'une quelconque des revendications 1 à 11, en tant qu'additif hydrofuge pour peintures et revêtements résistants aux agents atmosphériques.

13. Peintures et revêtements résistants aux agents atmosphériques, contenant les mélanges selon l'une quelconque des revendications 1 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10328636
- DE 69922682
- DE 60108984
- DE 3713126
- WO 2011084556 A
- US 2005148752 A
- EP 2035489 A